# EUROPÄISCHE PATENTSCHRIFT

(11) **EP 2 847 473 B1**
(45) Veröffentlichungstag und Bekanntmachung des Hinweises auf die Patenterteilung: **25.05.2016**
(21) Anmeldenummer: 13720915.1
(22) Anmeldetag: 02.05.2013
(51) Int. Cl.: F16B 25/10

(54) **BOHRSCHRAUBE UND DEREN VERWENDUNG**
SELF-DRILLING SCREW AND USE THEREOF
VIS AUTO-TARAUDEUSE ET SON UTILISATION

(30) Priorität: 10.05.2012 DE 102012009400
(43) Veröffentlichungstag der Anmeldung: 18.03.2015
(73) Patentinhaber: SFS Intec Holding AG, 9435 Heerbrugg (CH)
(72) Erfinder: ZÄCH, Marco, 9444 Diepoldsau (CH); SCHMID, Peter, 9443 Widnau (CH); DUTLER, René, 9453 Eichberg (CH)
(86) Internationale Anmeldenummer: PCT/EP2013/059102
(87) Internationale Veröffentlichungsnummer: WO 2013/167451

(56) Entgegenhaltungen:
- DE-C2- 2 502 284
- DE-U1-202009 011 665

## Beschreibung

Die Erfindung betrifft eine Bohrschraube, hergestellt aus einem austenitischen oder anderen nichtrostenden Stahl, mit einem Schaft mit einem gewindeformenden Bereich und mit einer Bohr- oder Durchdringspitze.

Eine Bohrspitze der vorgenannten Art ist aus dem Dokument DE 20 2009 011 665 U1 bekannt. Es handelt sich um eine Schraube, die wenigstens eine harte Bohrspitze und eine harte Gewindeformzone besitzt und aus einem Stück austenitischem, martensitischem oder ferritischem nichtrostenden Stahl oder nichtrostenden Duplexstahl besteht, wobei wenigstens die Bohrspitze und die Gewindeformzone einsatzgehärtet sind. Bohrschrauben der vorgenannten Art haben sich in vielen Bereichen als wirtschaftliche Befestigungstechnik durchgesetzt, da sie den Arbeitsgang des Vorbohrens sparen, weil mit gehärteten Bohrschrauben Baustähle von über 10 mm Stärke durchbohrt werden, wobei anschließend sofort das Gewinde gefurcht und die Schraube befestigt wird. An Bohrschrauben, die in Außenbereichen eingesetzt werden, also z. B. im Bereich einer Gebäudehülle, wo sie starken Witterungseinflüssen sowie Feuchtigkeit ausgesetzt sind, werden darüber hinaus hohe Anforderungen an deren Korrosionsbeständigkeit gestellt. Bei Bohrschrauben aus nichtrostenden V2A- oder V4A-Qualitäten erzielte man zunächst im Grundgefüge keine ausreichenden Härten - zumindest an der Schraubenoberfläche. Schrauben aus nichtrostendem Stahl sind aufgrund ihrer wärmebehandlungstechnischen Eigenschaften für Bohrarbeiten in z. B. Baustählen ohne Zusatzmaßnahmen nicht einsetzbar, obwohl die Korrosionseigenschaften einen dauerhaften Sicherheitsfaktor für die Schraubverbindung darstellen.

Um den Forderungen des Marktes Rechnung zu tragen, wurden aufgrund dieser zuvor beschriebenen werkstofftechnischen Ausgangssituation Bohrschrauben aus Edelstahl entwickelt, die hinsichtlich ihrer Herstellung sehr aufwendig sind, bzw. waren oder wenigstens einen gravierenden Nachteil hatten.

Ein grundlegendes und heutzutage überwiegend angewandtes Herstellungsprinzip beinhaltet die Produktion einer zweiteiligen Schraube. Die beiden Teile werden dabei miteinander verschweißt. Das ist ein sehr aufwändiger Prozess, bevor eine Bohrspitze und das Gewinde angebracht werden können. Die Bohrspitze und der gewindeformende Bereich bestehen in einer Ausführungsform aus Kohlenstoffstahl, der z. B. durch Induktions- oder Flammhärten abschließend gehärtet wurde.

Zur Vermeidung dieser Nachteile wird in dem vorgenannten Dokument die Herstellung einer nichtrostenden Edelstahl-Bohrschraube aus einem einzigen Stück angestrebt. Diese besondere Edelstahl-Bohrschraube hat wenigstens eine harte Bohrspitze und eine harte Gewindeformzone, die jeweils einsatzgehärtet sind. Aus dem, was dazu in dem Dokument im Einzelnen beschrieben ist, ist zu erkennen, dass auch diese Art der Herstellung aufwändig ist.

Es sind andere bekannte Verfahren in diesem Dokument angegeben wie z. B. Hartverchromen, chemisch Vernickeln, Inchromieren, die aber an einer oder an mehren der folgenden wesentlichen Rahmenbedingungen wie der Eignung für Massenartikel sowohl aus prozesstechnischer Sicht als auch unter Kostenaspekten (technischer Verfahrensaufwand und Verfahrensdauer), Umweltfreundlichkeit der Beschichtung, technologische Eignung des Verfahrens für Bohrschrauben hinsichtlich der erzielbaren Schichtdicke und unter Berücksichtigung der Festigkeit des Grundwerkstoffes der Bohrschraube gescheitert sind. Als Begründung für den letztgenannten Aspekt (nicht ausreichende Festigkeit des Grundwerkstoffes) ist angegeben, dass trotz äußerst harter Schichten von durchaus über 1000 HV durch die geringe Schichtdicke der sogenannte "Eierschaleneffekt" eintrete, demzufolge die Schicht eingedrückt und somit wirkungslos werde. Die Beschichtung bzw. Schicht könne also ihre Festigkeitseigenschaften nicht in den Anwendungsfall als Bohrschraube einbringen. Letztlich sei es daher bislang nicht gelungen, abgesehen von der in dem Dokument als neu beschriebenen Bohrschraube, bei der wenigstens die Bohrspitze und Gewindeformzone einsatzgehärtet sind, eine Bohrschraube zu entwickeln, die aus einem einzigen nichtrostendem Material besteht, deren Bohrspitze sowie deren gewindeformender Bereich für Bohrungen in Baustahl ausreichend hart und in erforderlichem Umfang weiterhin korrosionsbeständig sind.

In der Industrie wird daher weiterhin nichtrostenden Bohrschrauben der Vorzug gegeben, die zweistückig hergestellt und abschließend verschweißt werden. Leider erfordert diese Art von Bohrschraube einen großen Fertigungsaufwand und die Kosten ihrer Herstellung sind sehr hoch. Weiter ist es erforderlich, dass die aus rostendem Material bestehende Spitze, die an den Schaft aus nichtrostendem Material angeschweißt ist, nach dem Setzen der Bohrschraube nicht mehr in Eingriff ist. Die Bohrspitze kann nämlich im Laufe der Zeit wegrosten und so die hergestellte Verbindung beeinträchtigen. Darüber hinaus sind solche bekannten zweistückigen Bohrschrauben stets überdimensioniert, weil sie nur einmal verwendet werden. Andererseits kann aber eine solche Bohrschraube, die ihre Standfestigkeit nicht durch Einsatzhärtung erhalten soll, nicht aus einem Stück hergestellt werden, weil es nach einhelliger Auffassung der Fachwelt nicht möglich ist, mit einem Befestiger, der nur aus einem nichtrostendem Grundmaterial besteht, in Stahl zu bohren.

Es gibt zwar bereits die Möglichkeit, nichtrostende einstückige Bohrschrauben zu beschichten, nach dem oben genannten Dokument DE 20 2009 011 665 U1 ist es bislang aber nicht gelungen, eine solche Bohrschraube zu entwickeln, deren Bohrspitze und deren gewindeformender Bereich für Bohrungen in Baustahl ausreichend hart und in erforderlichem Umfang weiterhin korrosionsbeständig sind.

Es ist zwar gelungen, wie das Dokument DE 10 2004 054 193 A1 vermuten lässt, gegen Abrasion und hohe Flächenpressungen beständige Hartstoffbeschichtungen auf nachgiebigen Substraten herzustellen, diese sind aber offenbar für den Einsatz bei Bohrschrauben weder geeignet noch vorgesehen. Darüber hinaus ist die Hartstoffbeschichtung in der Herstellung aufwändig, denn es ist erforderlich, dass die Beschichtung aus mindestens zwei morphologisch unterschiedlichen Lagen besteht, wobei die erste, unmittelbar auf der Substratoberfläche aufliegende Lage eine metallische oder keramische Hartschicht ist und die äußerste Lage eine Hartschicht aus amorphem Kohlenstoff.

Eine ähnliche Lösung bietet das Dokument EP 0 761 844 B1, aus dem ein Verfahren zur galvanischen Verchromung bekannt ist. Diese Verfahren lehnt sich an ein aus einem weiteren Dokument, DE 25 02 284 C2, bekanntes Verfahren zum galvanischen Abscheiden von Chromüberzügen unter Verwendung eines galvanischen Verchromungsbades an. Nach dem letztgenannten Dokument lassen sich mit einem solchen Verchromungsbad glänzende bis metallgraue Chromüberzüge mit perlstrukturartiger Oberfläche mit einer Härte bis etwa 1500 HV erzielen. Diese Chromüberzüge mit dem Handelsnamen "DURALLOY" zeichnen sich zum einen durch hohe Verschleißfestigkeit, zum anderen durch günstige Gleiteigenschaften aus, da die homogene kugelförmige Oberfläche die Benetzbarkeit und damit die Ausbildung eines stabilen Ölfilms begünstigt. Das vorgenannte Dokument EP 0 761 844 B1 zielt darauf ab, den bekannten Chrom-Überzug dahingehend zu verbessern, dass er auch ohne Schmierstoffe hohe Verschleißfestigkeit bei niedrigen Reibwerten aufweist. Das wird erreicht, indem die perl- oder säulenstrukturartige Oberfläche des Hartchrom-Überzuges durch galvanisch aufgebrachtes Schwarzchrom aufgefüllt und geglättet wird. Dieses Schwarzchrom wird in einer Schichtdicke von mindestens 1 µm und vorzugsweise von etwa 2 µm bis etwa 6 µm aufgebracht, wodurch sichergestellt ist, dass die Perl- oder Säulenstruktur der unteren Hartchromschicht ganz oder weitgehend bedeckt wird. Beide Dokumente befassen sich also offenbar mit der Verbesserung der Schmiereigenschaften und nicht mit der Verbesserung der Standfestigkeit, die für den Einsatz einer solchen Beschichtung bei Bohrschrauben wichtig wäre.
Aus den Dokumenten DE 199 13 273 C2 und DE 199 29 090 A1 sind zwar Verfahren bekannt zum Herstellen von Perlchromschichten auf Werkstücken aus Metall, insbesondere Stahl, bzw. zur Beschichtung eines Werkstückes mit einem Schmierstoff, jedoch werden in beiden Fällen Werkstücke beschichtet und nicht etwa Werkzeuge, mit denen solche Werkstücke geschnitten oder gebohrt werden könnten. Das Verfahren nach dem vorgenannten Dokument DE 19 929 090 A1 stützt sich dabei auch auf das oben bereits als Dokument genannte deutsche Patent 25 02 284 bei der Herstellung eines ersten Überzuges. Auf diesen wird anschließend ein Schmierstoff auf Molybdändisulfid-Basis aufgebracht, der die perl- oder säulenstrukturartige Oberfläche ausfüllt und glättet.

Weiterhin ist aus dem Dokument DE 101 21 593 A1 ein Verfahren zur Beschichtung von Werkstücken mit einem Lagermetall bekannt. Die Hartchromschicht wird hier auf einem Werkstück und nicht auf einem Schneidwerkzeug erzeugt. Daher sind andere Parameter für die Hartchromschicht wichtig. Zu diesen Parametern gehören, dass die Perlstruktur mehr oder weniger regelmäßig ist und eine Rautiefe hat, die mindestens 1 µm beträgt und bis zu 5 µm erreicht. Die Hartchromschicht wird dann mit einer Silberschicht abgedeckt, welche die Hartchromschicht glättet. Die Silberschicht dient als Ersatz für die vorstehend in anderem Zusammenhang bereits erwähnte Molbydändisulfidschicht, die zur Verbesserung der Schmiereigenschaften aufgebracht wird. In dem vorliegenden Fall wird durch das Beschichten der Hartchromschicht mit Silber ein Lagermetall geschaffen, also ein Lagerwerkstoff, an den ganz andere Forderungen als an eine Bohrschneide gestellt werden.

Schließlich ist aus dem Dokument DE 32 35 447 A1 eine kaltgeschmiedete Bohrschraube aus einem rostfreien aus Tenitstahl zur Bildung eines Bohrerabschnitts, eines Gewindeabschnitts und eines Schraubkopfes bekannt, wobei der Bohrerabschnitt und der Gewindeabschnitt einer Einsatzhärtung unterzogen werden.

Aufgabe der Erfindung ist es, eine einfacher herstellbare Bohrschraube zu schaffen, wobei aber trotz der Herstellbarkeit zu geringeren Kosten die erwünschte Korrosionsbeständigkeit erhalten bleiben soll.

Diese Aufgabe ist, ausgehend von einer Bohrschraube der eingangs genannten Art, erfindungsgemäß dadurch gelöst, dass der Schaft einstückig aus einem austenitischen oder anderen nichtrostenden Stahl besteht und wenigstens im Bereich der Spitze mit einer galvanisch aufgebrachten dünnen Schicht versehen ist, wodurch der mit der Schicht versehene Bereich härter ist als ein nicht beschichteter Bereich, wobei die dünne Schicht
- eine perl- oder säulenstrukturartige Oberfläche hat,
- eine Schichtdicke von wenigstens von 2 µm aufweist, wobei vorzugsweise eine Schichtdicke von bis zu 30 µm vorgesehen ist, und
- eine Härte in einem Bereich von 500 bis 1500 HV0,3 aufweist.

Die Erfindung schafft somit eine voll austenitische Bohrschraube mit Beschichtung. Die Bohrschraube besteht nur aus einem Grundmaterial. Das Grundmaterial ist austenitisch (nichtrostend). Die erfindungsgemäß aufgebrachte Beschichtung gewährleistet die Bohrleistung und die Gewindeformung. Nach Meinung der Fachwelt war es bislang überhaupt nicht möglich, mit einem Befestiger aus nichtrostendem Grundmaterial zu bohren. Die Bohrschraube nach der Erfindung hat eine Spitze, die mit dem Walzen des gewindeformenden Bereiches hergestellt werden kann. Die Bohrschraube nach der Erfindung hat einen einfacheren Aufbau als die zweistückige bekannte Bohrschraube, weil mindestens der Schweißprozess entfällt. Die Bohrschraube nach der Erfindung muss nicht mehr bis zum rostfreien Bereich eingeformt werden, weil die Spitze auf jeden Fall nichtrostend ausgebildet ist. Grundsätzlich rostet kein Teil der Bohrschraube. Darüber hinaus kann die Bohrschraube kürzer ausgelegt werden, weil sie nicht mehr bis zum rostfreien Bereich eingeformt werden muss. Zu den geringeren Herstellkosten gesellt sich als weiterer Vorteil die Korrosionsbeständigkeit der erfindungsgemäßen Bohrschraube.

Weiter schafft die Erfindung die Verwendung einer Bohrschraube nach Anspruch 1 zum Verbinden von mindestens zwei aneinander zu befestigenden Bauteilen, von denen eines der Bewitterung ausgesetzt ist.

Vorteilhafte Ausgestaltungen der Bohrschraube nach der Erfindung und der Verwendung einer Bohrschraube nach der Erfindung bilden die Gegenstände der Unteransprüche.
In einer Ausgestaltung der Bohrschraube nach der Erfindung ist die galvanisch aufgebrachte dünne Schicht eine Hartchromschicht, insbesondere gemäß deutschem Patent 25 02 284. In diesem deutschen Patent ist von Belagshärten von bis zu 1000 Vickers-Einheiten die Rede und von einer Badzusammensetzung, die Chromüberzüge ergebe, welche sich für Standzeitverbesserungen von Schneidwerkzeugen gut eigneten. Die Erfahrung hat aber gezeigt, dass das nicht für Bohrschrauben gilt. Diese erfordern nämlich eine höhere Chromschichtstärke. Die Chromschichtstärke der erfindungsgemäßen Bohrschraube, die (an der vordersten Spitze) bis zu 30 µm erreicht, bei einer Härte in einem Bereich von bis zu 1500 HV0,3, hat sich als ausreichend erwiesen. Die Bohrschraube nach der Erfindung wird stets nur einmal eingesetzt, und für den dafür erforderlichen einmaligen Bohrvorgang hat sich die Chromschicht als standfest erwiesen.

In einer weiteren Ausgestaltung der Bohrschraube nach der Erfindung hat die galvanisch aufgebrachte dünne Schicht eine Eigenrauigkeit von 0,5 µm. Diese Eigenrauigkeit ist für die erzielte gute Schneidleistung der Bohrschraube nach der Erfindung einer der maßgeblichen Faktoren.

In einer weiteren Ausgestaltung der Bohrschraube nach der Erfindung hält die galvanisch aufgebrachte dünne Schicht einer Flächenpressung von bis zu 3,0 GPa stand. Die Perlstruktur der Oberfläche vergrößert den Flächeninhalt der Oberfläche und reduziert dadurch die spezifische Flächenpressung derart, dass der in dieser Ausgestaltung der Erfindung erreichte Wert einer aufzunehmenden Flächenpressung von bis zu 3,0 GPa ausreichend ist.

In einer weiteren Ausgestaltung der Bohrschraube nach der Erfindung hält die galvanisch aufgebrachte dünne Schicht einer dynamischen Belastung von bis 3,5 MPa stand. Auch das ist ein Ergebnis der Verringerung der spezifischen Oberflächenbelastung durch die Vergrößerung der Oberfläche durch die perloder säulenartige Struktur und außerdem ein Ergebnis der erfindungsgemäß größeren Schichtstärke der Bohrschraube von bis zu 30 µm.

In einer Ausgestaltung der Verwendung der Bohrschraube nach der Erfindung sind die aneinander zu befestigenden Bauteile Bestandteile einer Gebäudehülle. Das ist ein besonders bevorzugter Einsatzbereich der Bohrschraube nach der Erfindung, für die sie besonders ausgebildet und geeignet ist.

Ausführungsbeispiele der Erfindung werden im Folgenden unter Bezugnahme auf die Zeichnungen näher beschrieben. Es zeigt:
- Fig. 1: in einer Seitenansicht ein erstes Ausführungsbeispiel einer Bohrschraube nach der Erfindung, die mit einer Bohrspitze versehen ist,
- Fig. 2: in größerem Maßstab eine Einzelheit der Bohrspitze der Bohrschraube nach Fig. 1 und zugleich in einem sehr viel größeren Maßstab einen Bereich der Oberfläche der Bohrspitze im Bereich der Einzelheit in einer Draufsicht,
- Fig. 3: in einer Seitenansicht ein zweites Ausführungsbeispiel einer Bohrschraube nach der Erfindung, die mit einer Durchdringspitze versehen ist,
- Fig. 4: in größerem Maßstab eine Einzelheit der Bohrschraube nach Fig. 3 und zugleich in viel größerem Maßstab in Fig. 4a, 4b und 4c drei mögliche Ausprägungen einer auf die Bohrspitze galvanisch aufgebrachten dünnen Schicht, und zwar in Fig. 4a mit einer nach innen perligen Struktur, in Fig. 4b mit einer zackigen Struktur und in Fig. 4c mit einer nach außen perligen Struktur der Oberfäche der dünnen Schicht und
- Fig. 5: drei Beispiele von möglichen Verwendungen der Bohrschraube nach der Erfindung, und zwar in Fig. 5a bei der Befestigung von Wellblech auf vertikalen Trägern einer Fassade, in Fig. 5b bei der Befestigung von Trapezblech auf einem Doppel-T-Träger und in Fig. 5c bei dem Herstellen einer gegenseitigen Verbindung zwischen zwei einander überlappenden Trapezblechen.

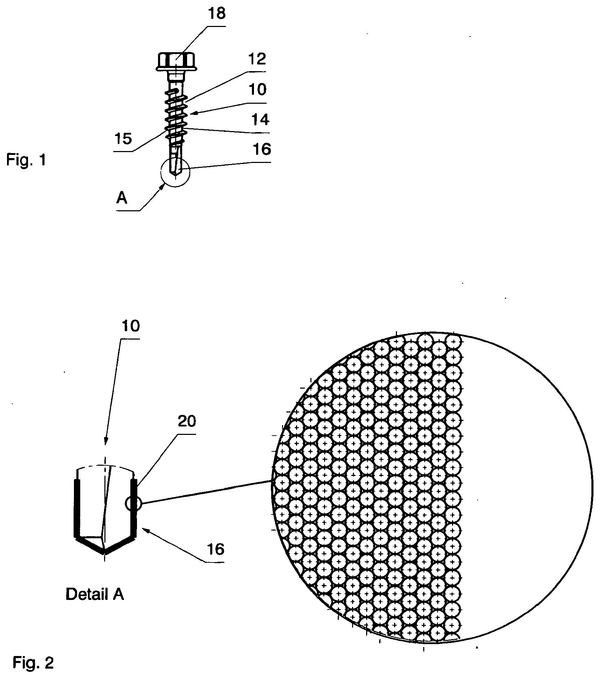

Fig. 1 zeigt ein erstes Ausführungsbeispiel einer Bohrschraube 10 nach der Erfindung, die einstückig aus einem austentischen oder anderen nichtrostenden Stahl hergestellt ist. Die Bohrschraube 10 hat einen Schaft 12 mit einem gewindeformenden, d. h. mit einem gewindefurchenden oder- schneidenden Bereich 14 und mit einer Bohrspitze 16 sowie einem Kopf 18. Bei dem Kopf 18 handelt es sich um einen üblichen Sechskantkopf. Der Kopf 18 kann stattdessen jede beliebige Kopfform aufweisen. Der Schaft 12 ist im Bereich der Bohrspitze 16 und wenigstens am Übergang in ein Gewinde 15 an der Oberfläche härter ausgebildet als der übrige Teil der Bohrschraube 10. Diese härtere Ausbildung der Oberfläche ist wichtig, damit die Bohrschraube 10 ihre Funktion erfüllen kann, nämlich mit der Bohrspitze 16 ein Loch zu bohren und dann in dem Loch ein Gewinde zu formen. Der austenitische oder andere nichtrostende Stahl, aus dem die Bohrschraube besteht, wäre von Haus aus dafür nicht geeignet. Solche Bohrschrauben müssen in der Lage sein, in Baustahl ein Loch zu bohren und darin Gewinde zu schneiden. Für diesen Zweck wäre eine Bohrschraube aus austenitischem oder anderem nichtrostendem Stahl zu weich.

In dem eingangs geschilderten Stand der Technik findet sich als ein Beispiel zum Erfüllen dieses Zweckes, dass die Bohrschraube zumindest im Bereich der Bohrspitze einsatzgehärtet wird. Von dieser Möglichkeit wird hier kein Gebrauch gemacht, um den Schaft 12 wenigstens im härter ausgebildeten Bereich wenigstens an der Oberfläche härter auszubilden als den übrigen Teil der Schraube.

Bei der Bohrschraube 10 besteht der Schaft 12 einstückig aus einem austentischen oder anderen nichtrostenden Stahl und ist in dem härter ausgebildeten Bereich mit einer galvanisch aufgebrachten dünnen Schicht 20 (Fig. 2) versehen. Fig. 2 zeigt als eine Einzelheit A die Bohrspitze 16 der Bohrschraube 10 in einem vergrößerten Maßstab. Zugleich zeigt Fig. 2 in einem wesentlich größeren Maßstab als eine Einzelheit die Oberfläche der Bohrspitze 16. Es ist zu erkennen, dass die dünne Schicht 20 eine perl- oder säulenstrukturartige Oberfläche hat. Durch die Perl- oder Säulenstruktur ergibt sich gegenüber einer glatten Oberfläche eine Oberfläche mit einem um mindestens 50 % größeren Flächeninhalt. Auf der Basis der Formel P = F/A kann gezeigt werden, dass, wenn die Fläche A vergrößert wird, die Flächenbelastung P der Fläche F reduziert werden kann. Messungen haben gezeigt, dass die Schicht 20 eine Dicke von wenigstens 2 µm und vorzugsweise von bis zu 30 µm hat. Der Maximalwert von 30 µm ist im Bereich der Bohrspitze 16 an der vorersten Spitze gemessen worden. Weiter haben die Messungen gezeigt, dass die Bohrschraube 10 in dem Bereich, in dem sie mit der Schicht 20 versehen ist, also härter ausgebildet ist, eine Härte in einem Bereich von 500 bis 1500 HV0,3 aufweist.

Bei dem hier gezeigten und beschriebenen Ausführungsbeispiel der Bohrschraube nach der Erfindung ist die galvanisch aufgebrachte dünne Schicht 20 eine Hartchromschicht, insbesondere gemäß deutschem Patent 25 02 284. Dieses deutsche Patent betrifft ein galvanisches Verchromungsbad und ein Verfahren zum galvanischen Abscheiden von Chromüberzügen unter Verwendung dieses Bades. Bezüglich Einzelheiten wird auf die Offenbarung dieses deutschen Patents verwiesen. Zur Klarstellung und zur besseren Erläuterung der Erfindung wird aber hier auf einige zusätzliche Gesichtspunkte mit Bezug auf dieses deutsche Patent eingegangen. In dem deutschen Patent ist zwar erwähnt, dass eine Badzusammensetzung, wie sie in dem Ausführungsbeispiel in dem deutschen Patent aufgeführt ist, Chromüberzüge ergebe, welche sich für Standzeitverbesserungen von Schneidwerkzeugen gut eigneten. Hauptsächlich befasst sich das deutsche Patent dann jedoch mit dem Nutzen der erzielten perlartigen Struktur des Chromüberzuges, welche ausschließlich von der Oberflächenqualität des Grundmaterials und den Belagsstromdichten abhänge und sehr günstige Gleiteigenschaften aufweise. Das deutet auf den Einsatz des Chromüberzuges nach dem deutschen Patent als Lagerwerkstoff hin. Allerdings gibt das deutsche Patent auch an, der Chromüberzug besitze sehr gute Hafteigenschaften auf dem Grundmaterial. Die maximale Chromschichtstärke liegt nach den Angaben in dem deutschen Patent im Bereich von 5 bis 10 µm.

Dem Fachmann ist bekannt, dass die Standfestigkeit einer Überzugsschicht auf der Schneidkante eines Schneidwerkzeuges verbessert wird, wenn die Schichtdicke vergrößert wird. Es ist dem Fachmann aber auch bekannt, dass beim Auftragen einer harten Schicht auf ein weiches Trägermaterial (wie nichtrostender Stahl) der sogenannte Eierschaleneffekt auftreten kann (harte Schale, weicher Kern), d. h., dass die harte Schicht bei Belastung bricht. Das trifft besonders zu, wenn sehr harte Schichten wie PVD-Beschichtungen eingesetzt werden. Bei der Bohrschraube nach der Erfindung sind solche sehr harten Schichten unnötig. Wichtiger sind die Schichtdicke und die dadurch erzielte Standfestigkeit sowie die Haftfestigkeit der Schicht an sich. Einfaches Beschichten wie Chromatieren oder Hartchromatieren, allenfalls mit geeigneten Additiven reicht aus, um mindestens einmal ein Werkzeug wie die Bohrschraube 10 einsetzen zu können. Entgegen der Meinung des Fachmannes sind solche Beschichtungen erzielbar, ohne dass der Eierschaleneffekt auftritt.

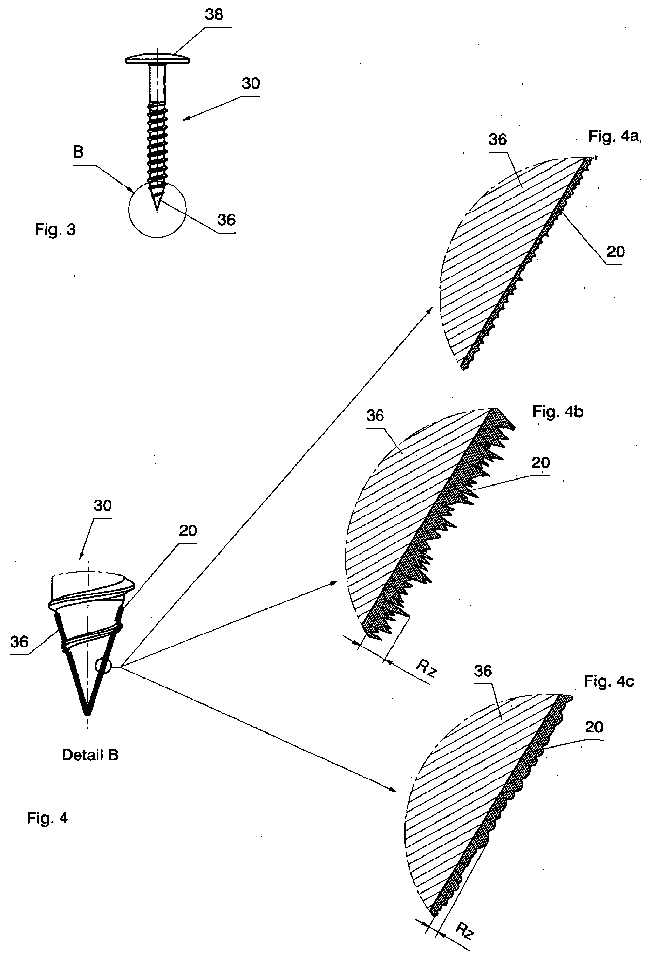

Weiter haben Messungen gezeigt, dass bei der Bohrschraube 10 die galvanisch aufgebrachte dünne Schicht 20 eine Eigenrauigkeit von 0,5 µm hat. Darauf wird mit Bezug auf die Fig. 3 und 4 noch näher eingegangen.

Ferner haben Messungen gezeigt, dass bei der Bohrschraube 10 die galvanisch aufgebrachte dünne Schicht 20 einer Flächenpressung von bis zu 3,0 GPa und einer dynamischen Belastung von bis zu 3,5 MPa standhält.

Fig. 3 zeigt als ein zweites Ausführungsbeispiel der Erfindung eine Bohrschraube 30 mit einer Durchdringspitze 36. Ansonsten unterscheidet sich die Bohrschraube 30 von der Bohrschraube 10 lediglich dadurch, dass sie einen Linsenflachkopf aufweist, der mit einem Innenwerkzeugangriff (z. B. Torx) versehen ist (in Fig. 3 nicht sichtbar).

In Fig. 4 ist die Durchdringspitze 36 als eine Einzelheit in vergrößertem Maßstab gezeigt. Im Übrigen gelten sämtliche vorstehenden Ausführungen zu der Bohrschraube 10 gleichermaßen auch für die Bohrschraube 30.

Die Fig. 4a bis 4c zeigen in drei Schnittdarstellungen im Detail B drei mögliche Ausprägungen der Schicht 20, und zwar in Fig. 4a die Schicht 20 mit einer nach innen perligen Oberfläche, in Fig. 4b die Schicht 20 mit einer zackigen Oberfläche und in Fig. 4c die Schicht 20 mit einer nach außen perligen Oberfläche. Die Ausprägung der Schicht 20 gemäß der Darstellung in Fig. 4c hat sich als am zweckmäßigsten herausgestellt. Die Eigen-Rauigkeit der Schicht 20, die mit Rz bezeichnet ist, beträgt in der Ausprägung nach Fig. 4c 0,5 µm. Bei der Ausprägung nach Fig. 4b ist der Wert von Rz wesentlich größer.

Bei der Ausprägung nach Fig. 4c haben Schichtdickenmessungen, die an der Bohrschraube 30 durchgeführt worden sind, Werte ergeben, die im Kopfbereich bei 2 - 4 µm im Gewindebereich bei 3 - 6 µm und im Bereich der Bohrspitze bei 8 -10 µm liegen, aber an der vordersten Spitze 15 - 30 µm betragen.

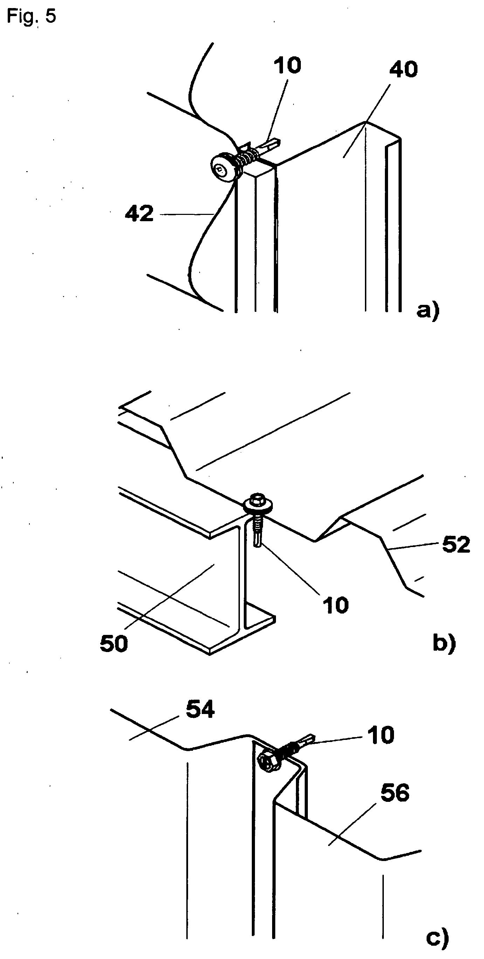

Eine bevorzugte Verwendung der Bohrschraube 10 oder 30 ist das Verbinden von mindestens zwei aneinander zu befestigenden Bauteilen, von denen eines der Bewitterung ausgesetzt ist. Die aneinander zu befestigenden Bauteile können Bestandteile einer Gebäudehülle sein. Drei Beispiele dafür sind in Fig. 5 gezeigt. In den Fig. 5a - 5c ist die Bohrschraube jeweils mit 10 bezeichnet. Es könnte sich selbstverständlich auch um die Bohrschraube 30 handeln. Die beiden aneinander zu befestigenden Bauteile sind in Fig. 5a ein vertikaler Fassadenträger 40 und ein Wellblech 42. In Fig. 5b sind es ein Doppel-T-Träger 50, der z. B. Teil einer Dachunterkonstruktion sein kann, und ein Trapezblech 52. In Fig. 5c sind es zwei Trapezbleche 54 und 56, welche durch die Bohrschraube 10 in ihrem Überlappungsbereich aneinander befestigt sind.

### Bezugszeichenliste

- 10: Bohrschraube
- 12: Schaft
- 14: gewindeformender Bereich
- 15: Gewinde
- 16: Bohrspitze
- 18: Kopf
- 20: Schicht
- 30: Bohrschraube
- 36: Durchdringspitze
- 38: Kopf
- 40: Fassadenträger
- 42: Wellblech
- 50: Doppel-T-Träger
- 52: Trapezblech
- 54: Trapezblech
- 56: Trapezblech

## Patentansprüche

1. Bohrschraube, hergestellt aus einem austenitischen oder anderen nichtrostenden Stahl, mit einem Schaft mit einem gewindeformenden Bereich und mit einer Bohr- oder Durchdringspitze, **dadurch gekennzeichnet, dass** der Schaft (12) einstückig aus einem austenitischen oder anderen nichtrostenden Stahl besteht und wenigstens im Bereich der Spitze mit einer galvanisch aufgebrachten dünnen Schicht (20) versehen ist, wodurch der mit der Schicht (20) versehene Bereich härter ist als ein nicht beschichteter Bereich, wobei die dünne Schicht (20)
- eine perl- oder säulenstrukturartige Oberfläche hat,
- eine Schichtdicke von wenigstens von 2 µm aufweist, wobei vorzugsweise eine Schichtdicke von bis zu 30 µm vorgesehen ist, und
- eine Härte in einem Bereich von 500 bis 1500 HV0,3 aufweist.

2. Bohrschraube nach Anspruch 1, **dadurch gekennzeichnet, dass** die galvanisch aufgebrachte dünne Schicht (20) eine Hartchromschicht ist.

3. Bohrschraube nach Anspruch 1 oder 2, **dadurch gekennzeichnet, dass** die galvanisch aufgebrachte dünne Schicht (20) eine Eigenrauigkeit von 0,5 µm hat.

4. Bohrschraube nach einem der vorhergehenden Ansprüche, **dadurch gekennzeichnet, dass** die galvanisch aufgebrachte dünne Schicht (20) einer Flächenpressung von bis zu 3,0 GPa standhält.

5. Bohrschraube nach einem der vorhergehenden Ansprüche, **dadurch gekennzeichnet, dass** die galvanisch aufgebrachte dünne Schicht (20) einer dynamischen Belastung von bis zu 3,5 MPa standhält.

6. Verwendung einer Bohrschraube (10, 30) nach einem der vorhergehenden Ansprüche zum Verbinden von mindestens zwei aneinander zu befestigenden Bauteilen (40, 42, 50, 52, 54, 56), von denen eines der Bewitterung ausgesetzt ist.

7. Verwendung nach Anspruch 6, **dadurch gekennzeichnet, dass** die aneinander zu befestigenden Bauteile (40, 42, 50, 52, 54, 56) Bestandteile einer Gebäudehülle sind.

## Claims

1. Self-drilling screw, made of an austenitic or other stainless steel, comprising a shank having a thread-forming region and a drill tip or penetrating tip, **characterised in that** the shank (12) is formed in one piece from an austenitic or other stainless steel and is provided with a galvanically applied thin coating (20) at least in the region of the tip, as a result of which the region provided with the coating (20) is harder than a noncoated region, the thin coating (20) having:
- a pearl-like or columnar surface structure,
- a coating thickness of at least 2 µm, a coating thickness of up to 30 µm preferably being provided, and
- a hardness in a range of from 500 to 1500 HV0.3.

2. Self-drilling screw according to claim 1, **characterised in that** the galvanically applied thin coating (20) is a hard chromium coating.

3. Self-drilling screw according to either claim 1 or claim 2, **characterised in that** the galvanically applied thin coating (20) has an inherent roughness of 0.5 µm.

4. Self-drilling screw according to any of the preceding claims, **characterised in that** the galvanically applied thin coating (20) withstands a surface pressure of up to 3.0 GPa.

5. Self-drilling screw according to any of the preceding claims, **characterised in that** the galvanically applied thin coating (20) withstands a dynamic load of up to 3.5 MPa.

6. Use of a self-drilling screw (10, 30) according to any of the preceding claims for connecting at least two components (40, 42, 50, 52, 54, 56) to be fastened to one another, one of which is exposed to weathering.

7. Use according to claim 6, **characterised in that** the components (40, 42, 50, 52, 54, 56) to be fastened to one another are components of a building envelope.

## Revendications

1. Vis auto-taraudeuse réalisée en un acier austénitique ou en un acier inoxydable autre comportant une tige équipée d'une zone de formation de taraudage et une pointe de perçage ou de pénétration,
**caractérisée en ce que**
l'arbre (12) est réalisé en une seule pièce en un acier austénitique ou un acier inoxydable autre et au moins dans la zone de la pointe, il est prévu une couche mince (20) appliquée par voie galvanique de sorte que la zone équipée de la couche (20) soit plus dure qu'une zone non revêtue, la couche mince (20),
- ayant une surface présentant une structure de type perlée ou colonnaire,
- ayant une épaisseur d'au moins 2 µm, de préférence une épaisseur allant jusqu'à 30 µm, et
- présentant une dureté comprise dans la plage de 500 à 1500 HV0,3.

2. Vis auto-taraudeuse conforme à la revendication 1,
**caractérisée en ce que**
la couche mince (20) appliquée par voie galvanique est une couche de chrome dur.

3. Vis auto-taraudeuse conforme à la revendication 1 ou 2,
**caractérisée en ce que**
la couche mince (20) appliquée par voie galvanique a une rugosité propre de 0,5 µm.

4. Vis auto-taraudeuse conforme à l'une des revendications précédentes,
**caractérisée en ce que**
la couche mince (20) appliquée par voie galvanique résiste à une pression superficielle allant jusqu'à 3,0 GPa.

5. Vis auto-taraudeuse conforme à l'une des revendications précédentes,
**caractérisée en ce que**
la couche mince (20) appliquée par voie galvanique résiste à une charge dynamique allant jusqu'à 3,5 MPa.

6. Utilisation d'une vis auto-taraudeuse (10, 30) conforme à l'une quelconque des revendications précédentes pour relier au moins deux pièces (40, 42, 50, 52, 54, 56) devant être fixées l'une à l'autre et dont l'une est exposée aux intempéries.

7. Utilisation conforme à la revendication 6,
**caractérisée en ce que**
les pièces (40, 42, 50, 52, 54, 56) devant être fixées l'une à l'autre sont des éléments d'une enveloppe de bâtiment.
